# EUROPEAN PATENT APPLICATION

(11) **EP 4 566 816 A1**
(43) Date of publication of application: **11.06.2025**
(21) Application number: 23849932.1
(22) Date of filing: 21.07.2023
(51) Int. Cl.: B32B 27/32, A61J 1/03, B32B 27/00, B65D 65/40, C08J 5/18

(54) **FRANGIBLE FILM AND PACKAGING MATERIAL**

(30) Priority: 05.08.2022 JP 2022125223
(71) Applicant: DIC Corporation, Tokyo 174-8520 (JP)
(72) Inventor: SHOUJI, Kento, Tokyo 174-8520 (JP); WATANABE, Yasushi, Tokyo 174-8520 (JP)
(74) Representative: Kraus & Lederer PartGmbB
(86) International application number: PCT/JP2023/026865
(87) International publication number: WO 2024/029377

(57) **Abstract**

As a mono-materialized frangible film having excellent frangibleness, provided is a frangible film having a base material layer containing a cyclic olefin resin on a surface thereof, in which the thickness of the base material layer with respect to the total thickness of the frangible film is 40% or more. For the frangible film, it is preferable that the base material layer contains a cyclic olefin resin having a glass transition temperature of 60°C or higher. Furthermore, it is preferable that the base material layer is composed of a surface resin layer on the surface side and an inorganic substance-containing layer containing an inorganic substance.

## Description

### TECHNICAL FIELD

The present invention relates to a frangible film and a package.

### BACKGROUND ART

For the packaging of pharmaceutical products such as tablets and capsules, food products, and the like, a packaging form called PTP (Press Through Package) has been utilized. This PTP packaging is generally composed of a blister container in which a sheet formed of a resin system is provided with a recessed part for accommodating an item to be packaged, and an aluminum film serving as a lid material for covering the recessed part from the back of the blister container after a capsule or the like is accommodated in this recessed part.

Before PTP-packaged products are manufactured in pharmaceutical companies, trial operations are conducted using only PTP packaging materials to check in advance for any defects in the production line, and therefore, a certain amount of PTP packaging material waste produced during the trial operations is generated. A portion of the waste is recycled; however, it is difficult to separate the resin sheet from the aluminum lid material, and the waste is mostly incinerated as industrial waste.

From the viewpoint of making effective use of limited resources and reducing greenhouse effect gases, a lid material that has a resin composition unified with that of the blister container (mono-materialized) and can be separated and recycled, is desirable.

As a laminated film for PTP cover that can be used in place of the cover film for PTPs, where aluminum foil has been used so far, a laminated film for PTP cover has been reported, which has a heat-sealable resin (A) layer, a cyclic olefin-based resin (B) layer, and a heat-sealable heat-resistant resin (C) layer, and in which these layers are laminated in the order of layer (A)/layer (B)/layer (C), and the piercing strength measured using a metal needle with a tip diameter of 1 mm is less than 5 N (see, for example, PTL 1).

### CITATION LIST

### PATENT LITERATURE

PTL 1: JP H11-105217 A

### SUMMARY OF INVENTION

### TECHNICAL PROBLEM

The present invention aims to solve various problems in the related art and to achieve the following object. That is, it is an object to provide a frangible film that has excellent frangibility and is mono-materialized.

### SOLUTION TO PROBLEM

The present invention is based on the above-described findings of the present inventors, and the means for solving the above-described object is as follows. That is,
<1> A frangible film having a base material layer containing a cyclic olefin resin on a surface thereof,
   wherein a thickness of the base material layer with respect to a total thickness of the frangible film is 40% or more.
<2> The frangible film according to the item <1>, wherein the base material layer contains a cyclic olefin resin having a glass transition temperature of 60°C or higher.
<3> The frangible film according to the item <1> or <2>, wherein the base material layer is composed of a surface resin layer on the surface side and an inorganic substance-containing layer containing an inorganic substance.
<4> The frangible film according to the item <3>, wherein a content of the inorganic substance is 0.1% by mass or more and 10% by mass or less with respect to a total amount of the frangible film.
<5> The frangible film according to any one of the items <1> to <4>, further including a heat seal layer on an opposite side of the surface.
<6> The frangible film according to any one of the items <1> to <5>, wherein a thrust strength required when the frangible film is thrust out using a jig having a flat plate-shaped tip part with a diameter of 13 mm, is 35 N or less.
<7> The frangible film according to any one of the items <1> to <6>, further having a water vapor and/or oxygen barrier layer.
<8> The frangible film according to the item <1>, wherein the frangible film serves as a lid material of a package.
<9> A package having: a container with a recessed part; and a lid material,
   wherein the lid material is the frangible film according to any one of the items <1> to <8>.
<10> The package according to the item <9>, wherein the package is used for food or beverage packaging, or for medical purposes.

### ADVANTAGEOUS EFFECTS OF INVENTION

According to the present invention, the various problems in the related art can be solved, the above-described object can be achieved, and a frangible film that has excellent frangibility and is mono-materialized can be provided.

### BRIEF DESCRIPTION OF DRAWINGS

FIG. 1 is a schematic cross-sectional view illustrating an example of a frangible film of the present invention.
FIG. 2 is a schematic cross-sectional view illustrating another example of the frangible film of the present invention.
FIG. 3 is a schematic cross-sectional view illustrating an example of a package of the present invention.

### DESCRIPTION OF EMBODIMENTS

### (Package)

First, a package of the present invention will be described.

The package of the present invention has a container (bottom material) with a recessed part, and a lid material, and the lid material is the frangible film of the present invention that will be described below. The lid material can be thermally adhered (heat-sealed) to an opening part of the container.

The package is preferably used for food and beverage packaging or for medical purposes.

The package is preferably a PTP (Press Through Package), and specifically, a packaging form having a container (bottom material) with a plurality of independent recessed parts, and a lid material, in which objects to be accommodated (also referred to as contents) are accommodated in the recessed parts, subsequently the lid material is placed thereon, air is removed or purged with an inert gas or the like, and the contact portion between the container and the lid material is heat-sealed, may be mentioned.

Furthermore, the package is preferably a package having a container such as a paper pack or a plastic cup, and a lid material as a straw piercing opening, and specific examples thereof include a packaging form obtained by producing a package in which the contact portion between the container and the lid material is heat-sealed, and then an object to be accommodated such as a beverage is accommodated in the container portion and tightly sealed; and a packaging form obtained by accommodating an object to be accommodated such as a beverage in the container, subsequently placing a lid material thereon, removing air or purging air with an inert gas or the like, and heat-sealing the contact portion between the container and the lid material.

The shape of the recessed part in the package, and the seal width or area between the lid material and the container vary depending on the shape and form of the object to be accommodated that is packaged, and cannot be univocally specified; however, the shape of the recessed part and the seal width or area are not particularly limited and can be appropriately selected in accordance with the intended application form.

It is preferable that the package is used for food and beverage packaging or for medical purposes.

As the pharmaceutical product to be used for the medical purposes, any pharmaceutical product to which the PTP (Press Through Package) packaging form is applied can be appropriately selected according to the purpose without particular limitation, and examples thereof include tablets and capsules.

The food and beverage can be appropriately selected according to the purpose without particular limitation, and examples thereof include food products in a tablet form, such as supplements, chocolates, Ramune candies, and gummies; and beverages accommodated in packages such as paper packs and plastic cups with a lid material as a straw piercing opening.

### (Frangible film)

A frangible film of the present invention is a frangible film having a base material layer containing a cyclic olefin resin on a surface thereof, and the thickness of the base material layer with respect to the total thickness of the frangible film is 40% or more.

The frangible film can be suitably used as a lid material of the above-described package.

Here, the term "frangibleness" means that the film is torn and cut off when force is applied thereto, and it may be easy thrust-out or easy piercing.

The term "easy thrust-out" means that when force is applied to the film from the outside of the container (bottom material) through an accommodated object (for example, a tablet), the film breaks, and the accommodated object can be thrust out.

The "ease of thrust-out" can be evaluated by measuring the thrust strength at the time of thrusting out a fixed film using a jig having a flat plate-shaped tip part (for example, a circular shape with a diameter of 13 mm).

The thrust strength of the frangible film when thrusting out using a jig having a circular and flat plate-shaped tip part with a diameter of 13 mm, is preferably 35 N or less, more preferably 25 N or less, and even more preferably 20 N or less. When the thrust strength is 35 N or less, the frangible film has satisfactory ease of thrust-out.

Specifically, the thrust strength can be determined by fixing a film as a measurement target, such as a frangible film, between two sheets of stainless steel having a hole (diameter: 55 mm) at the center, thrusting a jig having a flat plate-shaped tip of 13 mm into the film stretched across the hole, and measuring the thrust strength (compression strength) applied when the film breaks. Incidentally, in a case where the film does not break and, for example, becomes stretched out, or in a case where the film breaks but the thrust strength exceeds 35 N, it can be determined that it is not a "frangible film".

The term "easy piercing" means that when a tip part is pressed against a film and force is applied thereto, the film breaks while the tip part can penetrate the film, and the tip part may be, for example, a diagonally cut tip part of a drinking straw.

The "ease of piercing" can be evaluated by thrusting out a fixed film using, for example, a jig having a metal needle with a tip diameter of 1 mm.

The frangible film has a base material layer on the surface, and the base material layer may be a combined form composed of a surface resin layer on the surface side and an inorganic substance-containing layer containing an inorganic substance, may be a surface resin layer alone, or may be an inorganic substance-containing layer alone.

It is preferable that the frangible film further has a heat seal layer on the opposite side of the surface.

Furthermore, the frangible film may further have another layer such as a barrier layer or a print layer, on the surface side of the base material layer.

An embodiment of the frangible film is a frangible film having at least a base material layer and a heat seal layer, which are laminated in the order of base material layer/heat seal layer.

Another embodiment of the frangible film is a frangible film which has at least a surface resin layer (A), an inorganic substance-containing layer (B), and a heat seal layer (C), and in which the surface resin layer (A), the inorganic substance-containing layer (B), and the heat seal layer (C) are laminated in the order of (A)/(B)/(C).

The base material layer or the surface resin layer (A) is on the outer side of the package, and the heat seal layer (C) is on the inner side of the package and forms a heat seal surface with the container (bottom material).

The container of the package can be heat-sealed by the heat seal layer (C) of the frangible film.

The frangible film can be suitably used as a frangible film for the package of the present invention.

It is preferable that the frangible film is a co-extruded frangible film having at least a surface resin layer (A), an inorganic substance-containing layer (B), and a heat seal layer (C). Furthermore, it is preferable that the frangible film is a frangible film having another layer (α) such as a barrier layer or a print layer on the surface resin layer (A) side, which are laminated in the order of (α)/(A)/(B)/(C).

### <Base material layer>

The base material layer contains a cyclic olefin resin as a main resin component. The resin component may contain an olefin resin that does not have a cyclic structure, as necessary; however, it is preferable that the resin component is composed of a cyclic olefin resin.

The base material layer may be a combined form composed of a surface resin layer and an inorganic substance-containing layer, may be a surface resin layer alone, or may be an inorganic substance-containing layer alone.

The base material layer may be a surface layer on which printing can be provided.

### <<(A) Surface resin layer>>

The surface resin layer (A) contains a cyclic olefin resin as a main resin component, and may contain an olefin resin that does not have a cyclic structure, as necessary; however, it is preferable that the surface resin layer (A) is formed from a cyclic olefin resin.

The surface resin layer (A) may be a surface layer on which printing can be provided.

### - Cyclic olefin resin -

The cyclic olefin resin can be appropriately selected according to the purpose without particular limitation, and examples thereof include a norbornene-based polymer, a vinyl alicyclic hydrocarbon polymer, and a cyclic conjugated diene polymer.

Examples of the norbornene-based polymer include a ring-opened polymer of a norbornene-based monomer (hereinafter, referred to as "COP"), a norbornene-based copolymer obtained by copolymerizing a norbornene-based monomer and an olefin such as ethylene (hereinafter, referred to as "COC"), and hydrogenation products of COP and COC.

Among the cyclic olefin resins, norbornene-based polymers are preferred, and hydrogenation products of COP and COC are more preferred.

The weight average molecular weight of the cyclic olefin resin can be appropriately selected according to the purpose without particular limitation; however, the weight average molecular weight is preferably 5,000 to 500,000, and more preferably 7,000 to 300,000.

The norbornene-based monomer used as the norbornene-based polymer and a raw material is an alicyclic monomer having a norbornene ring.

Examples of the norbornene-based monomer include norbornene, tetracyclododecene, ethylidene norbornene, vinyl norbornene, ethylide tetracyclododecene, dicyclopentadiene, dimethanotetrahydrofluorene, phenyl norbornene, methoxycarbonyl norbornene, and methoxycarbonyl tetracyclododecene. These may be used singly, or two or more kinds thereof may be used in combination.

The norbornene-based copolymer is a product obtained by copolymerizing the norbornene-based monomer and an olefin that can be copolymerized with the norbornene-based monomer.

Examples of the olefin that can be copolymerized with the norbornene-based monomer include olefins having 2 to 20 carbon atoms, such as ethylene, propylene, and 1-butene; cycloolefins such as cyclobutene, cyclopentene, and cyclohexene; and non-conjugated dienes such as 1,4-hexadiene. These may be used singly, or two or more kinds thereof may be used in combination.

The cyclic olefin resin may be a commercially available product or a synthetic product.

Examples of the commercially available product include, as the ring-opened polymer of a norbornene-based monomer (COP), "ZEONOR" manufactured by ZEON CORPORATION; and as the norbornene-based copolymer (COC), "APEL" manufactured by Mitsui Chemicals, Inc., and "TOPAS" manufactured by Polyplastics Co., Ltd.

The melt volume rate (MVR) of the cyclic olefin resin can be appropriately selected according to the purpose without particular limitation; however, in the case of measurement conditions of a temperature of 230°C and a load of 2.16 kg, the melt volume rate is preferably 1.0 cm³/10 min to 50.0 cm³/10 min, more preferably 1.0 cm³/10 min to 20.0 cm³/10 min, even more preferably 2.0 cm³/10 min to 18.0 cm³/10 min, and particularly preferably 2.0 cm³/10 min to 15.0 cm³/10 min. Furthermore, when measured under the measurement conditions of a temperature of 260°C and a load of 2.16 kg, the melt volume rate is preferably 1.0 cm³/10 min to 50.0 cm³/10 min, more preferably 1.0 cm³/10 min to 20.0 cm³/10 min, even more preferably 2.0 cm³/10 min to 10.0 cm³/10 min, and particularly preferably 2.0 cm³/10 min to 7.0 cm³/10 min.

Here, the melt volume rate (MVR) is a value measured at a temperature of 230°C or 260°C at a load of 2.16 kg (21.18 N) in accordance with JIS K7210.

The glass transition point (Tg) of the cyclic olefin resin can be appropriately selected according to the purpose without particular limitation; however, the glass transition point is preferably 60°C or higher, and more preferably 75°C or higher.

Two or more types of cyclic olefin resins having different Tg values may be used in combination, and the Tg of a cyclic olefin resin having a high Tg is preferably 100°C or higher, and more preferably 125°C or higher.

In the case of an embodiment in which the frangible film has only a surface resin layer without including an inorganic substance-containing layer as the base material layer containing a cyclic olefin resin, the content of a cyclic olefin resin having a Tg of 100°C or higher in the surface resin layer is preferably 50% by mass or more, more preferably 75% by mass or more, and even more preferably 90% by mass or more, from the viewpoint that the resulting frangible film has excellent frangibility and rigidity.

In the case of an embodiment in which the base material layer in the frangible film is composed of a surface resin layer and an inorganic substance-containing layer, the content of a cyclic olefin resin having a Tg of 100°C or higher in the surface resin layer and the inorganic substance-containing layer is preferably 30% by mass or more, and more preferably 40% by mass or more, from the viewpoint that the resulting frangible film has excellent frangibility and rigidity.

Furthermore, the glass transition point (Tg) of the cyclic olefin resin can be appropriately selected according to the purpose without particular limitation; however, from the viewpoint that production according to a co-extrusion lamination method with other resin layers is enabled, and from the viewpoint of the ease of industrial availability of raw materials, the glass transition point is preferably 200°C or lower.

The glass transition point can be measured using a differential scanning calorimeter (DSC) (for example, manufactured by Hitachi High-Tech Science Corporation, DSC-7020).

Since norbornene-based copolymers having a high glass transition point (for example, Tg of 100°C or higher) may have low tensile strength and may be easily cut or torn off, a high-Tg product and a low-Tg product having a glass transition point of lower than 100°C may be used in combination to adjust the balance of physical properties, in consideration of the balance between the film-forming properties, suitability for take-up or winding at the time of slitting, and lamination strength.

Particularly, when the rigidity is too high, and there are problems such as easy tearing or breakage of the bag when dropped during transportation, the strength can be improved by blending a COC having a Tg of lower than 100°C. Furthermore, an olefin resin such as a propylene resin or an ethylene resin, which has high compatibility with COC and does not have a cyclic structure, may also be blended.

The thickness ratio of the base material layer is 40% or more, preferably 50% or more, and more preferably 60% or more, with respect to the total thickness of the frangible film.

The average thickness of the base material layer can be appropriately selected according to the purpose without particular limitation; however, the average thickness is preferably 5 µm to 40 µm, and more preferably 10 µm to 36 µm.

The thickness ratio of the surface resin layer (A) can be appropriately selected according to the purpose without particular limitation; however, with respect to the total thickness of the frangible film, when the base material is a combined form, the thickness ratio is preferably 10% to 90%, and more preferably 15% to 80%; and when the base material is a surface resin layer alone, the thickness ratio is preferably 40% to 95%, and more preferably 50% to 90%.

The average thickness of the surface resin layer (A) can be appropriately selected according to the purpose without particular limitation; however, when the base material layer is a combined form, the average thickness is preferably 2 µm to 38 µm, and more preferably 2.5 µm to 35 µm; and when the base material layer is a surface resin layer alone, the average thickness is preferably 5 µm to 40 µm, and more preferably 8 µm to 36 µm.

### <<(B) Inorganic substance-containing layer>>

The inorganic substance-containing layer (B) contains a cyclic olefin resin as a main resin component, further contains an inorganic substance, and includes other components as necessary.

The resin component may contain an olefin resin that does not have a cyclic structure, as necessary; however, it is preferable that the resin component is composed of a cyclic olefin resin.

### - Cyclic olefin resin -

Regarding the cyclic olefin resin, the items described for the base material layer and the surface resin layer (A) can be appropriately selected.

### - Inorganic substance -

The inorganic substance can be appropriately selected according to the purpose without particular limitation, and examples thereof include calcium carbonate, talc, silica, alumina, clay, antimony oxide, aluminum hydroxide, magnesium hydroxide, hydrotalcite, calcium silicate, magnesium oxide, potassium titanate, barium titanate, titanium oxide, calcium oxide, magnesium oxide, manganese dioxide, boron nitride, and aluminum nitride.

The inorganic substances may be used singly, or two or more kinds thereof may be used in combination.

Among these, one or more selected from the group consisting of calcium carbonate, silica, alumina, aluminum hydroxide, barium titanate, talc, boron nitride, and aluminum nitride are preferred, and one or more selected from the group consisting of calcium carbonate, alumina, aluminum hydroxide, and talc are more preferred.

The shape such as particle size, fiber length, and fiber diameter of the inorganic filler is not particularly limited, and may be appropriately adjusted according to the intended use applications. Furthermore, the surface treatment state of the inorganic filler is also not particularly limited, and surface modification with, for example, a saturated fatty acid or the like may be carried out in accordance with the intended use applications.

The inorganic filler may be used in the form of being blended in advance into the thermoplastic resin, or may be used in the form of a master batch.

The content of the inorganic substance can be appropriately selected according to the purpose without particular limitation; however, the content is preferably 0.1% by mass or more and 10% by mass or less, and more preferably 1% by mass or more and 5% by mass or less, with respect to the total amount of the frangible film.

When the content is 0.1% by mass or more and 10% by mass or less, the frangible film has excellent frangibility and is also satisfactory in terms of barrier properties and film-forming properties.

The thickness ratio of the inorganic substance-containing layer (B) can be appropriately selected according to the purpose without particular limitation; however, when the base material layer is a combined form, the thickness ratio is preferably 10% to 90%, and more preferably 15% to 50%, with respect to the total thickness of the frangible film; and when the base material layer is an inorganic substance-containing layer alone, the thickness ratio is preferably 40% to 95%, and more preferably 50% to 90%.

The average thickness of the inorganic substance-containing layer (B) can be appropriately selected according to the purpose without particular limitation; however, when the base material layer is a combined form, the average thickness is preferably 2 µm to 38 µm, and more preferably 2.5 µm to 35 µm; and when the base material layer is an inorganic substance-containing layer alone, the average thickness is preferably 5 µm to 40 µm, and more preferably 8 µm to 36 µm.

### <<(C) Heat seal layer>>

The heat seal layer (C) contains a known thermoplastic resin that imparts heat sealing properties as a main resin component, and further contains other resins and components as necessary.

### - Resin -

As the thermoplastic resin, a known thermoplastic resin can be appropriately selected according to the purpose without particular limitation, and examples thereof include an α-olefin resin, a styrene resin, an ester resin, an acrylic resin, and the cyclic olefin resin. Among these, from the viewpoint that satisfactory heat sealing properties can be imparted, an α-olefin resin is preferred.

Examples of the α-olefin resin include homopolymers of α-olefin monomers (a polyethylene homopolymer, a polypropylene homopolymer, and the like); and copolymers containing α-olefin monomers as main components (a propylene-ethylene block copolymer, a propylene-ethylene random copolymer, an ethylene-butene-1 copolymer, a propylene-butene-1 copolymer, and the like). These may be used singly, or two or more kinds thereof may be used in combination.

The thickness ratio of the heat seal layer (C) can be appropriately selected according to the purpose without particular limitation; however, the thickness ratio is preferably 20% to 60%, and more preferably 30% to 60%, with respect to the total thickness of the frangible film.

The average thickness of the heat seal layer (C) can be appropriately selected according to the purpose without particular limitation; however, the average thickness is preferably 4 µm to 28 µm, and more preferably 6 µm to 25 µm.

The heat seal layer is disposed on the base material layer directly or with an optional layer such as an anchor coat layer interposed therebetween.

As a method for forming the heat seal layer (C), the heat seal layer (C) can be provided by extruding the resin and the like together with the base material layer by a co-extrusion method. Furthermore, the heat seal layer (C) can be provided by applying a heat sealing agent obtained by dispersing or dissolving the resin and the like in a solvent.

Regarding such a heat sealing agent, a commercially available hot melt sealing agent can be used. The heat sealing agent can be applied entirely or partially on a desired side of the outermost surface of the laminate.

The heat sealing agent is not particularly limited, and may be in any form, such as a type in which a thermoplastic resin having heat sealing properties is dissolved in an organic solvent, a type in which the thermoplastic resin is dissolved in water or an aqueous organic solvent, or an emulsion type in which the thermoplastic resin is dispersed in water or an aqueous organic solvent.

Examples of the resin having heat sealing properties include thermoplastic resins such as a shellac, a rosin, a rosin-modified maleic acid resin, a rosin-modified phenol resin, nitrocellulose, cellulose acetate, cellulose acetyl propionate, cellulose acetyl butyrate, chlorinated rubber, cyclized rubber, vinyl chloride, vinylidene chloride, a polyamide resin, a vinyl chloride-vinyl acetate copolymer, a polyester resin, a ketone resin, a butyral resin, a chlorinated polypropylene resin, a chlorinated polyethylene resin, a chlorinated ethylene vinyl acetate resin, an ethylene vinyl acetate resin, an acrylic resin, a urethane resin, an ethylene-vinyl alcohol resin, a styrene-maleic acid resin, casein, and an alkyd resin. These may be used singly, or two or more kinds thereof may be used in combination.

The organic solvent can be appropriately selected according to the purpose without particular limitation, and examples thereof include various organic solvents, including aromatic hydrocarbon-based solvents such as toluene, xylene, SOLVESSO #100, and SOLVESSO #150; aliphatic hydrocarbon-based solvents such as hexane, heptane, octane, and decane; and ester-based solvents such as methyl acetate, ethyl acetate, isopropyl acetate, butyl acetate, amyl acetate, ethyl formate, and butyl propionate.

Examples of the aqueous organic solvent include alcohol-based solvents such as methanol, ethanol, propanol, and butanol; ketone-based solvents such as acetone, methyl ethyl ketone, and cyclohaxanone; and glycol ethers such as ethylene glycol (mono-, di-)methyl ether, ethylene glycol (mono-, di-)ethyl ether, ethylene glycol monopropyl ether, ethylene glycol monoisopropyl ether, monobutyl ether, diethylene glycol (mono-, di-)methyl ether, diethylene glycol (mono-, di-)ethyl ether, diethylene glycol monoisopropyl ether, diethylene glycol monobutyl ether, triethylene glycol (mono-, di-)methyl ether, propylene glycol (mono-, di-)methyl ether, propylene glycol monopropyl ether, propylene glycol monobutyl ether, and dipropylene glycol (mono-, di-)methyl ether.

The heat sealing agent may further include other components. Examples of the other components include lubricating agents such as a wax and a filler, an antifoaming agent, a plasticizer, a leveling agent, an emulsifier, a dispersion stabilizer, a surfactant, a tackifier, an antiseptic agent, an antibacterial agent, an antirust agent, an antioxidant, a crosslinking agent, a curing agent, a curing catalyst, a light stabilizer, an ultraviolet absorber, a photocatalytic compound, a dye, an inorganic pigment, an organic pigment, an extender pigment, and an antistatic agent.

The wax can be appropriately selected according to the purpose without particular limitation, and examples thereof include fatty acid amide wax, carbana wax, polyolefin waxes such as polyethylene wax and polypropylene wax; paraffin wax, Fischer-Tropsch wax, beeswax, microcrystalline wax, oxidized polyethylene wax, amide wax; coconut oil fatty acids, and soybean oil fatty acids. These may be used singly, or two or more kinds thereof may be used in combination.

By using a wax, the blocking resistance can be improved. From the viewpoint of improving the blocking resistance without deteriorating the heat sealing properties, it is preferable to use a polyethylene wax.

The blending amount of the wax can be appropriately selected according to the purpose without particular limitation; however, the blending amount is preferably 0.1% by mass to 20% by mass with respect to the total amount of the thermoplastic resin, and from the viewpoint of the balance between heat sealing properties and blocking resistance, the blending amount is more preferably 3% by mass or more and 15% by mass or less.

The filler can be appropriately selected according to the purpose without particular limitation, and examples thereof include silica, calcium carbonate, calcium phosphate, talc, urethane beads, acrylic beads, and melamine beads. These may be used singly, or two or more kinds thereof may be used in combination. It is preferable to use either or both of silica and acrylic beads.

By using a filler, the blocking resistance can be improved. Furthermore, for example, when the laminate of the present invention is stored at a high temperature, it is possible to suppress the heat seal layer from flowing out and having a smaller film thickness.

The shape of the filler can be appropriately selected according to the purpose without particular limitation; however, from the viewpoint of being less susceptible to deformation due to heat and obtaining a stable anti-blocking effect regardless of the mode of dispersion in the coating film, the shape is preferably a spherical shape. The average particle size of the filler is appropriately adjusted depending on the filler used; however, the average particle size is, for example, 0.5 µm to 10 µm.

The anti-foaming agent can be appropriately selected according to the purpose without particular limitation, and examples thereof include fatty acid salts, higher alcohol sulfates, liquid fatty oil sulfuric acid esters, sulfates of aliphatic amines and aliphatic amides, aliphatic alcohol phosphoric acid esters, sulfonates of dibasic fatty acid esters, fatty acid amide sulfonates, alkyl allyl sulfonates, naphthalene sulfonates of formalin condensation, polyoxyethylene alkyl ethers, polyoxyethylene alkyl phenol ethers, polyoxyethylene alkyl esters, sorbitan alkyl esters, polyoxyethylene sorbitan alkyl esters, acrylic polymers, siliconmixed acrylic polymers, vinyl-based polymers, and polysiloxane compounds.

The method for applying the heat sealing agent can be appropriately selected according to the purpose without particular limitation, and examples thereof include a gravure coating method, a reverse coating method, a kiss coating method, an air knife coating method, a Mayer bar coating method, a roll coating method, and a dip coating method.

The heat seal layer may be provided over the entire surface of the laminate, or may be provided only on the portion that will be heat-sealed when a package is produced.

When the heat sealing agent is applied and then dried, a heat seal layer is formed. The drying temperature is 50°C to 180°C, and the drying time is about 0.5 seconds to 1 minute. The drying method is not particularly limited; however, an example thereof may be hot air drying. If necessary, a corona discharge treatment or the like may be carried out as a post-treatment.

The amount of the heat sealing agent applied (solid content) can be appropriately selected according to the purpose without particular limitation, and for example, the amount is 1.0 g/m² to 15.0 g/m², preferably 2.0 g/m² to 10.0 g/m², and more preferably 2.0 g/m² to 8.0 g/m².

When a heat seal layer is provided by coating, an anchor coat layer may be provided under the heat seal layer. A resin similar to that of the above-mentioned heat seal layer can be used for the anchor coat layer. Furthermore, the anchor coat layer can be formed by, for example, applying a coating liquid containing a resin on one surface of the base material layer. The average thickness of the anchor coat layer can be appropriately selected according to the purpose without particular limitation; however, the average thickness is preferably 1 µm to 10 µm, and more preferably 1 µm to 5 µm.

In the base material layer, the heat seal layer, and other layers, components such as an antifogging agent, an antistatic agent, a heat stabilizer, a nucleating agent, an antioxidant, a lubricating agent, an anti-blocking agent, a mold release agent, an ultraviolet absorber, a colorant, and an extrusion modifier can be added as necessary, to the extent that does not impair the purpose of the present invention.

### <<(α) Other layer>>

The frangible film of the present invention may have another layer (α) such as a water vapor and/or oxygen barrier layer (hereinafter, may be referred to as a "barrier layer"), a print layer, an OP varnish layer (also referred to as an "overprint varnish layer", an "overcoat layer", or a "topcoat layer").

When the frangible film has the other layer (α), it is preferable that the other layer (α) is a water vapor and/or oxygen barrier layer, from the viewpoint that, for example, in a case where the object to be accommodated is a pharmaceutical product, the required high storage stability can be ensured.

Furthermore, the other layer (α) may be a print layer on which printing of a packaging film can be provided.

The frangible film may further have another layer (α) on the surface side of the base material layer, and may be a frangible film in which (α)/base material layer/heat seal layer are laminated in this order, or a frangible film in which (α)/(A)/(B)/(C) are laminated in this order.

The other layer (α) may be a single layer, or may be a plurality of layers. A plurality of the other layers (α) may have compositions identical with each other, or may have compositions different from each other.

The other layer (α) may be extruded together with the base material layer and the heat seal layer and form a co-extruded frangible film in which (α)/base material layer/heat seal layer are laminated in this order, or (α)/(A)/(B)/(C) are laminated in this order, or the other layer (α) may be adhered to a frangible film in which base material layer/heat seal layer are laminated in this order, or (A)/(B)/(C) are laminated in this order, to form a laminate film in which (α)/(A)/(B)/(C) are laminated in this order. Furthermore, the other layer (α) may be provided by applying a coating agent or an ink composition.

The method of adhering when laminating the other layer (α) can be appropriately selected according to the purpose without particular limitation, and examples thereof include dry lamination, wet lamination, non-solvent lamination, and extrusion lamination.

The other layer (α) can be appropriately selected according to the purpose without particular limitation, and examples for co-extrusion include olefin resins such as a propylene resin, while examples for a laminate film include unstretched polyester (CPET), unstretched nylon (CNY), unstretched polypropylene (CPP), unstretched polyethylene (CPE), unstretched polystyrene (CPS), expanded polystyrene (EPS), biaxially stretched polyester (OPET), biaxially stretched polypropylene (OPP), an ethylene-vinyl alcohol copolymer (EVOH), co-extruded biaxially stretched polypropylene, a biaxially stretched ethylene-vinyl alcohol copolymer (EVOH), co-extruded biaxially stretched polypropylene coated with polyvinylidene chloride (PVDC), and biaxially stretched nylon.

Furthermore, the other layer (α) may be provided between the base material layer and the heat seal layer, or may be provided on both surfaces of the base material layer. Specifically, the frangible film can be configured to have base material layer/(α)/heat seal layer or (α)/base material layer/(α)/heat seal layer.

Specifically, the following configuration may be mentioned as a configuration in which a barrier layer, a print layer, and an OP varnish layer are provided as the other layers (α).
Barrier layer/character print layer/base material layer/character print layer/heat seal layer
Barrier layer/character print layer/solid print layer/base material layer/character print layer/heat seal layer
Barrier layer/character print layer/solid print layer/base material layer/solid print layer/character print layer/heat seal layer
Barrier layer/character print layer/base material layer/solid print layer/character print layer/heat seal layer
OP varnish layer/character print layer/base material layer/character print layer/heat seal layer
OP varnish layer/character print layer/solid print layer/base material layer/character print layer/heat seal layer
OP varnish layer/character print layer/solid print layer/base material layer/solid print layer/character print layer/heat seal layer
OP varnish layer/character print layer/base material layer/solid print layer/character print layer/heat seal layer
OP varnish layer/barrier layer/character print layer/base material layer/character print layer/heat seal layer
OP varnish layer/barrier layer/character print layer/solid print layer/base material layer/character print layer/heat seal layer
OP varnish layer/barrier layer/character print layer/solid print layer/base material layer/solid print layer/character print layer/heat seal layer
OP varnish layer/barrier layer/character print layer/base material layer/solid print layer/character print layer/heat seal layer

In a case where the frangible film has the other layer (α), the average thickness of the other layer (α) (in the case of a plurality of layers, the total average thickness) can be appropriately selected according to the purpose without particular limitation.

### - Water vapor and/or oxygen barrier layer (barrier layer) -

Regarding a method for forming the barrier layer, a method of laminating a film having barrier properties, a method of producing a coating film layer by applying a barrier coating agent, and the like may be mentioned.

Among these, a method of producing a coating film layer by applying a barrier coating agent is preferred from the viewpoint of convenience.

Examples of the barrier coating agent include coating agents containing polymers such as polyvinyl alcohol (PVOH), ethylene vinyl alcohol (EVOH), polysaccharide, polymers based on acrylic acid or methacrylic acid, starch or starch derivatives, cellulose nanofibers (CNF), nanocrystalline cellulose (NCC), chitosan, other cellulose derivatives, hemicellulose, and polyvinylidene chloride (PVDC); and coating agents using at least any one of the above-described coating agents and an inorganic compound in combination.

Examples of the inorganic substance include plate-shaped inorganic compounds such as silica, alumina, aluminum flakes, glass flakes, hydrous silicates (phyllosilicate minerals and the like), kaolinite-serpentine family clay minerals (halloysite, kaolinite, endelite, dickite, nacrite, antigorite, chrysotile, and the like), pyrophyllite-talc family (pyrophyllite, talc, kerolite, and the like), smectite family clay minerals (montmorillonite, beidellite, nontronite, saponite, hectorite, sauconite, stevensite, and the like), vermiculite family clay minerals (vermiculite and the like), mica or mica family clay minerals (mica such as muscovite and phlogopite, margarite, tetrasilylic mica, tainiolite, and the like), chlorite family (cookeite, sudoite, clinochlore, chamosite, nimite, and the like), hydrotalcite, plate-shaped barium sulfate, boehmite, and aluminum polyphosphate.

The barrier coating agent is not particularly limited, and any known barrier coating agent can be used in accordance with the purpose. Examples of the known barrier coating agent include "Sunbar" series manufactured by SUNCHEMICAL Co.,Ltd. , and the polyesterbased barrier coating agents described in JP 5617831 B2.

### -- Inorganic vapor deposition layer --

Furthermore, the barrier layer may be an inorganic vapor deposition layer that can be provided for the purpose of imparting gas barrier properties.

The inorganic vapor deposition layer can be formed using inorganic substances, inorganic oxides, various metals, metal oxides, metal hydroxides, metal salts, and the like.

For example, aluminum, alumina, silica, zinc oxide, magnesium oxide, calcium oxide, manganese oxide, iron oxide, cobalt oxide, nickel oxide, and the like may be used singly, or two or more kinds thereof can be used in combination, as in the case of binary vapor deposition of silica and alumina. Two or more inorganic vapor deposition layers may be provided. When two or more inorganic vapor deposition layers are provided, each may have the same composition, or they may have different compositions. From the viewpoint of the gas barrier properties, it is preferable to use aluminum.

The inorganic vapor deposition layer can be provided on each of the above-mentioned layers or on a separate base material, by a conventionally known method. Examples of a method for forming an inorganic vapor deposition layer include Physical Vapor Deposition methods (PVD methods) such as a vacuum vapor deposition method, a sputtering method, and an ion plating method; and Chemical Vapor Deposition methods (CVD methods) such as a plasma chemical vapor deposition method, a thermochemical vapor deposition method, and a photochemical vapor deposition method.

The film thickness of the inorganic vapor deposition layer is preferably 1 nm to 200 nm. When the inorganic vapor deposition layer is an aluminum vapor deposition layer, the film thickness is more preferably 1 nm to 100 nm, even more preferably 15 nm to 60 nm, and still more preferably 10 nm to 40 nm. When the inorganic vapor deposition layer is a silica or alumina vapor deposition layer, the film thickness is preferably 1 nm to 100 nm, more preferably 10 nm to 50 nm, and even more preferably 20 nm to 30 nm.

### - Print layer -

The print layer is a layer on which a desired pattern is formed using ink or the like in order to impart aesthetic appeal, various pieces of information related to the object to be accommodated, and functionality to the frangible film of the present invention, which is an object to be subjected to printing.

The print layer contains a binder resin and a colorant and is formed by printing ink.

The print layer may be a single layer, or there may be a plurality of print layers. The single layer may be a character print layer on which characters or any objects are printed, or may be a solid print layer. When there is a plurality of print layers, the print layer may be a solid print layer, or a print layer obtained by overprinting a character print layer on a print layer with objects and the like printed thereon, and the respective inks used for the print layers may be the same, may have the same composition with only the colorant being different, or may have different compositions.

### -- Ink --

The ink is preferably a liquid printing ink used as a gravure printing ink or a flexographic printing ink. The liquid printing inks are roughly classified into organic solvent type liquid printing inks that use organic solvents as a main solvent, and aqueous liquid printing inks that use water as a main solvent; however, either may be used in the present invention. Furthermore, there are so-called front printing inks, and back printing inks premised on lamination; however, either may be used in the present invention.

Here, organic solvent type liquid printing inks, which constitute the mainstream, will be described.

Examples of a binder resin used for the liquid printing inks include cellulosic resins, such as cellulose-based resins such as nitrocellulose, cellulose acetate propionate (CAP), and cellulose acetate butyronate (CAB), a polyamide-based resin, a urethane-based resin, an acrylic resin, a vinyl chloride-vinyl acetate copolymer resin, a chlorinated polypropylene resin, an ethylene-vinyl acetate copolymer resin, a vinyl acetate resin, vinyl chloride-based resins such as a polyvinyl chloride resin, a polyester resin, an alkyd resin, a rosin-based resin, a rosin-modified maleic acid resin, a ketone resin, a cyclized rubber, a chlorinated rubber, butyral, and petroleum resins.

Furthermore, a curing agent may be used in combination with the binder resin. As the curing agent, any curing agent generally used in organic solvent-based gravure printing inks may be used; however, the most commonly used curing agents are isocyanate-based curing agents.

From the viewpoint of curing efficiency, the amount of an isocyanate compound added is preferably 0.3% by mass to 10.0% by mass, and more preferably 1.0% by mass to 7.0% by mass, with respect to the liquid printing ink solid content.

The binder resin is preferably 0.15% by mass to 50% by mass, and more preferably 1% by mass to 40% by mass, with respect to the liquid printing ink.

### -- Solvent --

The solvent used in the liquid printing ink is not particularly limited; however, examples thereof include water, aromatic hydrocarbon-based organic solvents such as toluene, xylene, SOLVESSO #100, and SOLVESSO #150; aliphatic hydrocarbon-based organic solvents such as hexane, methylcyclohexane, heptane, octane, and decane; and various ester-based organic solvents such as methyl acetate, ethyl acetate, isopropyl acetate, normal propyl acetate, butyl acetate, amyl acetate, ethyl formate, and butyl propionate. Furthermore, examples of a water-miscible organic solvent include various organic solvents of alcohol-based solvents such as methanol, ethanol, propanol, butanol, and isopropyl alcohol; ketone-based solvents such as acetone, methyl ethyl ketone, and cyclohaxanone; and glycol etherbased solvents such as ethylene glycol (mono-, di-)methyl ether, ethylene glycol (mono-, di-)ethyl ether, ethylene glycol monopropyl ether, ethylene glycol monoisopropyl ether, monobutyl ether, diethylene glycol (mono-, di-)methyl ether, diethylene glycol (mono-, di-)ethyl ether, diethylene glycol monoisopropyl ether, diethylene glycol monobutyl ether, triethylene glycol (mono-, di-)methyl ether, propylene glycol (mono-, di-)methyl ether, propylene glycol monopropyl ether, propylene glycol monobutyl ether, and dipropylene glycol (mono-, di-)methyl ether. These may be used singly, or two or more kinds thereof may be used in combination.

### -- Colorant --

The liquid printing ink contains a colorant, and can be used as a liquid printing ink containing a colorant used for design printing and the like for the purpose of imparting aesthetic beauty and the like. Examples of the colorant include inorganic pigments, organic pigments, and dyes used in general inks, paints, recording agents, and the like, and pigments are preferred. Examples of the organic pigments include soluble azo-based, insoluble azo-based, azo-based, phthalocyanine-based, halogenated phthalocyanine-based, anthraquinonebased, anthanthrone-based, dianthraquinonyl-based, anthrapyrimidine-based, perylene-based, perinone-based, quinacridone-based, thioindigo-based, dioxazine-based, isoindolinone-based, quinophthalone-based, azomethine azo-based, flavanthrone-based, diketopyrrolopyrrolebased, isoindoline-based, indanthrone-based, and carbon black-based pigments. Further examples include carmine 6B, lake red C, permanent red 2B, disazo yellow, pyrazolone orange, carmine FB, chromophthalic yellow, chromophthalic red, phthalocyanine blue, phthalocyanine green, dioxazine violet, quinacridone magenta, quinacridone red, indanthrone blue, pyrimidine yellow, thioindigo bordeaux, thioindigo magenta, perylene red, perinone orange, isoindolinone yellow, aniline black, diketopyrrolopyrrole red, and daylight fluorescent pigment. Furthermore, both non-acid-treated pigments and acid-treated pigments can be used.

Examples of the inorganic pigments include white inorganic pigments such as titanium oxide, zinc oxide, zinc sulfide, barium sulfate, calcium carbonate, chromium oxide, silica, lithopone, antimony white, and gypsum. Among the inorganic pigments, it is particularly preferable to use titanium oxide. Titanium oxide exhibits white color and is preferred from the viewpoints of coloring power, concealing power, chemical resistance, and weather resistance, and from the viewpoint of printing performance, it is preferable that the titanium oxide is treated with silica and/or alumina.

Examples of the inorganic pigments other than white pigments include aluminum particles, mica, bronze powder, chromium vermilion, lead yellow, cadmium yellow, cadmium red, ultramarine, Prussian blue, red iron oxide, yellow iron oxide, black iron oxide, and zircon. Aluminum is in a powdered form or a paste form; however, from the viewpoints of handleability and safety, it is preferable to use aluminum in a paste form, and whether leafing or non-leafing aluminum should be used is appropriately selected in view of high brightness feeling and concentration.

The content of the pigment is preferably an amount sufficient for ensuring the concentration and coloring power of the liquid printing ink, that is, 1% by mass to 60% by mass with respect to the total mass of the liquid printing ink, and the content is preferably 10% by mass to 90% by mass in the solid content weight ratio in the liquid printing ink. Furthermore, these pigments can be used singly or in combination of two or more kinds thereof.

The organic solvent type liquid printing ink can further contain a wax, a chelatebased crosslinking agent, an extender pigment, a leveling agent, an antifoaming agent, a plasticizer, an infrared absorber, an ultraviolet absorber, an aromatic agent, a flame retardant, and the like as necessary.

### - Biomass liquid printing ink -

With regard to the liquid printing ink, it is preferable to use a liquid printing ink that uses plant-derived raw materials, in consideration of the need to establish a recycling-based society that should continue to develop (sustainability).

Examples of the plant-derived raw materials include cellulosic resins such as cellulose acetate propionate resin and nitrocellulose; polyamide resins that use dimer acids or polymerized fatty acids derived from natural oils such as soybean oil-derived, palm oil-derived, and rice bran oil-derived natural oils; biomass polyurethanes synthesized from plant-derived raw materials, such as succinic acid, succinic anhydride, adipic acid, azelaic acid, sebacic acid, dimer acid, glutaric acid, malic acid, and the like as polycarboxylic acids, and ethylene glycol, 1,2-propanediol, 1,3-propanediol, 1,4-butanediol, neopentyl glycol, pentylene glycol, 1,10-dodecanediol, dimer diol, isosorbide, and the like as polyols, and 1,5-pentamethylene diisocyanate and dimer diisocyanate as polyisocyanates; and rosin resins.

Commercially available products can also be utilized as the biomass liquid printing ink. As the commercially available products, the inks described in the Japan Organics Recycling Association can be used.

### - UV Cut ink -

With regard to the liquid printing ink used in the present invention, it is also preferable to use a UV cut ink having an ultraviolet radiation shielding effect. The UV cut ink is not particularly limited as long as it is an ink containing zinc oxide and the like and having a high ultraviolet radiation shielding effect, and any commercially available UV cut ink can be used.

### - OP varnish layer -

The OP varnish layer is a coating for protecting the lid material surface from scratches or heat.

As the OP varnish, for example, a polyvinyl butyral resin; a blend of an epoxy resin and an amino resin; cellulose resins such as a nitrocellulose resin, cellulose acetate, cellulose propionate, and cellulose butyrate; polyester resins having a benzene ring of phthalic acid, naphthalenedicarboxylic acid, ethylene oxide (hereinafter, may be referred to as "EO") adduct of bisphenol A, or the like, and/or an alicyclic skeleton such as cyclopentanediol and dimethyloltricyclodecane; and urethane resins in which an aromatic isocyanate such as diphenylmethane diisocyanate, toluene diisocyanate, xylene diisocyanate, or naphthalene diisocyanate, an alicyclic isocyanate such as isophorone diisocyanate or norbornene diisocyanate, and/or isocyanuric triisocyanate are bonded to polyol and/or tris(2-hydroxyethyl) isocyanurate, can be used.

Furthermore, as the curing agent for the OP varnish layer, for example, a polyisocyanate that uses the above-mentioned isocyanates may be used. Furthermore, a radical copolymer of a compound having a benzene ring and an unsaturated double bond, such as styrene or phenoxy diethylene glycol acrylate; a compound having an alicyclic structure and an unsaturated double bond, such as isobornyl acrylate or dicyclopentanyl acrylate; a (meth)acrylate; and the like can also be preferably used.

It is preferable that the OP varnish layer has heat resistance, and it is preferable that among the OP vanish, the OP varnish layer contains a resin having a polymer skeleton such as a cellulose skeleton, a benzene ring skeleton, an isocyanuric ring skeleton, or an alicyclic skeleton, and having a polymer glass transition temperature (hereinafter, may be referred to as "Tg") of 100°C or higher.

Furthermore, in consideration of the close adhesiveness to an olefin film, a resin having a low Tg may be mixed into the OP varnish and used.

Furthermore, the OP varnish layer may further contain a colorant and be colored.

The colorant is not particularly limited, and examples thereof include inorganic pigments, organic pigments, and dyes used in general inks and the like, which are used in the above-mentioned print layer.

Furthermore, it is preferable that the OP varnish layer further contains inorganic microparticles as an aggregate, since the inorganic microparticles have excellent heat resistance.

Examples of the inorganic microparticles include boron nitride, aluminum nitride, alumina, magnesia, titania, zirconia, zinc oxide, silicon oxide, and silica (quartz, fumed silica, precipitated silica, silicic anhydride, fused silica, crystalline silica, ultrafine amorphous silica, and the like).

Among these, boron nitride, aluminum nitride, alumina, titania, magnesia, zinc oxide, silicon oxide, and the like are preferable because they have excellent thermal conductivity.

The inorganic microparticles may be used singly, or two or more kinds thereof may be used in combination.

The primary particle size of the inorganic microparticles is preferably 5 nm to 200 nm, and more preferably 10 nm to 100 nm. When the primary particle size is 5 nm or more, the inorganic microparticles in the dispersion are satisfactorily dispersed, and when the primary particle size is 200 nm or less, the strength of the cured product is improved.

In order to prevent damage to the coating film, prevent blocking during laminate formation, and impart processability during bag making after a laminate is produced, the OP varnish layer may further contain at least any one of a wax, a silicon additive, and organic beads.

Examples of the wax include amide wax, polypropylene wax, polyethylene wax, paraffin wax, carnauba wax, and rice wax. Examples of the silicon additive include an ethylene oxide (EO) adduct of dimethylsiloxane, and a silicon modification product. Examples of the organic beads include organic beads formed from acryl, nylon, urethane, or epoxy.

The solvent used for the coating agent that forms the OP varnish layer is not particularly limited, and solvents similar to the solvents used in the above-described printing ink can be used.

### [Method for producing frangible film]

The method for producing the frangible film of the present invention is not particularly limited; however, a co-extrusion method in which each resin or resin mixture used in each layer is heated and melted in each separate extruder, surface resin layer (A)/inorganic substance-containing layer (B)/heat seal layer (C), or surface resin layer (A) alone or inorganic substance-containing layer (B) alone/heat seal layer (C) are laminated in a molten state by a method such as a co-extrusion multilayer die method or a feed block method, and then the laminate is molded into a film form by an inflation method, a T-die chill roll method, or the like, may be mentioned. A co-extrusion method is preferred because it is possible to adjust the thickness ratio of each layer relatively freely, and a multilayer film having excellent hygienic properties and excellent cost performance is obtained. When a resin having a large difference between the melting point and Tg is laminated, the film appearance may be deteriorated during co-extrusion processing, or it may be difficult to form a uniform layer configuration. In order to suppress such deterioration, a T-die chill roll method by which melt extrusion can be carried out at a relatively high temperature is preferred.

When a heat seal layer is formed using the above-described heat sealing agent, a heat seal layer may be provided by obtaining a laminate other than the heat seal layer, a surface resin layer (A) alone, or an inorganic substance-containing layer (B) alone, and then applying the heat sealing agent thereon by the above-described method.

In addition, when printing, lamination, or the like is performed on a surface other than the heat seal layer (C), it is preferable that the surface other than the heat seal layer (C) is subjected to a surface treatment in order to improve the adhesiveness to printing inks or adhesives. Examples of such a surface treatment include surface oxidation treatment such as a corona treatment, a plasma treatment, a chromic acid treatment, a flame treatment, a hot air treatment, and an ozone-ultraviolet radiation treatment; and surface unevenness treatments such as sand blasting. Among these, a corona treatment is preferred.

The exposed surface on the heat seal layer (C) side may be subjected to a surface treatment.

### <Container (bottom material)>

As the container (bottom material), any known container can be appropriately selected according to the purpose without particular limitation, and in the case of an embodiment of PTP, a container obtained by molding a resin is preferred, while in the case of a container for beverages, a paper pack, a plastic cup, and the like that can be heat-sealed to a lid material for a straw opening is preferred.

As the resin, any known olefin resin that can be heat-sealed can be appropriately selected according to the purpose without particular limitation.

The package of the present invention has a lid material and a container with a recessed part, the lid material can be thermally adhered (heat-sealed) to the opening part of the container, and an object to be accommodated can be accommodated in the recessed part and sealed by heat-sealing of the lid material and the container.

Alternatively, in the case of a package such as a paper pack for beverages, in which the lid material and the container have been heat-sealed in advance, an object to be accommodated can be accommodated in the package and sealed.

Regarding a method for producing the frangible film, any known method can be appropriately selected according to the purpose without particular limitation, and examples thereof include a co-extrusion method and lamination processing.

As the co-extrusion method, for example, a method of extruding the base material layer (or the surface resin layer (A) and the inorganic substance-containing layer (B)) and the heat seal layer (C) through a T-die at an extrusion temperature (for example, 250°C) such that the thickness of each layer has a predetermined ratio, cooling the layers with a water-cooled metal cooling roll (for example, 40°C), subsequently subjecting the layers to a corona discharge treatment as necessary, subsequently winding the layers on a roll, and aging (for example, 24 hours) the layers in an aging chamber (for example, 40°C), may be mentioned.

As a method for producing the container having a recessed part, any known method can be appropriately selected according to the purpose without particular limitation, and for example, a method of molding a container having a recessed part capable of accommodating an object to be accommodated, from a sheet-shaped film using a mold having a specific shape (for example, a shape conforming to the object to be accommodated), may be mentioned.

The shape and number of the recessed parts, and the seal width or area between the lid material and the container in the package vary widely depending on the shape or form of the object to be accommodated and cannot be univocally specified; however, those items can be appropriately selected according to the intended application form without particular limitation.

As the method of heat-sealing the lid material and the container, any known method can be appropriately selected according to the purpose without particular limitation, and for example, a method in which the object to be accommodated is accommodated in the recessed part of the container, subsequently the lid material is placed over the container, air is removed or purged with an inert gas or the like, and a contact portion between the lid material and the container is heat-sealed, may be mentioned.

The heat-sealing can be appropriately carried out using a known heat-sealing packaging machine according to the purpose without particular limitation. The molding heating temperature and molding time in the heat-sealing can be appropriately selected according to the purpose without particular limitation, and for example, the molding heating temperature and molding time may be 80°C to 180°C and 0.1 seconds to 5.0 seconds.

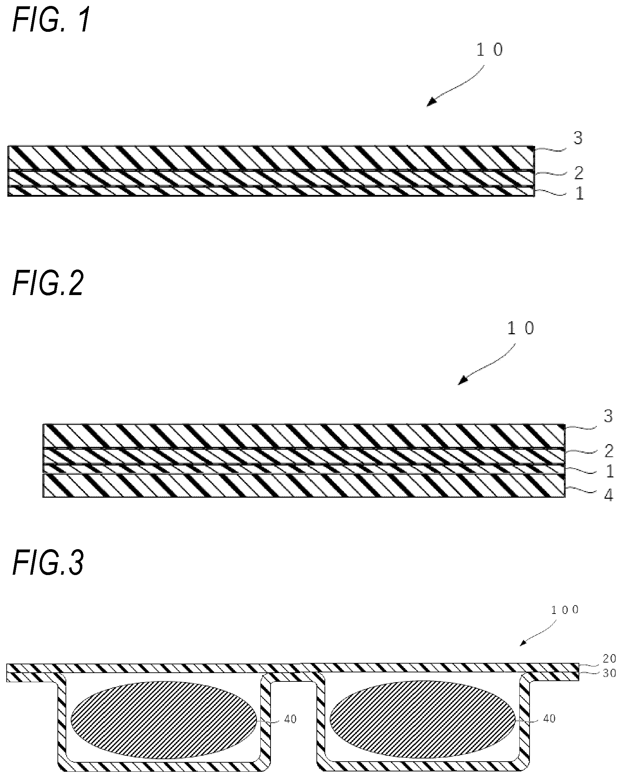

A frangible film 10 according to the present embodiment is, for example, a frangible film composed of a surface resin layer (A) 1, an inorganic substance-containing layer (B) 2, and a heat seal layer (C) 3 as shown in FIG. 1, in which the layers are laminated in the order of (A)/(B)/(C).

Furthermore, as shown in FIG. 2, the frangible film 10 according to another embodiment may be a frangible film further having another layer (α) 4 on the surface resin layer (A) 1 side, in which the layers are laminated in the order of (α)/(A)/(B)/(C). The other layer (α) 4 may be a single layer, or may be a plurality of layers.

FIG. 3 is a schematic cross-sectional view illustrating an example of the package according to the present embodiment. A package 100 is a package having a lid material 20 and a container 30 with a recessed part, in which contents 40 (for example, tablets) can be individually accommodated in a plurality of independent recessed parts, and each of the contents can be taken out by thrusting out.

In the package 100, the lid material 20 is the frangible film 10, and the heat seal layer (C) 3 of the frangible film 10 is heat-sealed with the container 30.

### EXAMPLES

Hereinafter, the present invention will be more specifically described based on Examples; however, the present invention is not intended to be limited to the following Examples.

### (Example 1)

### <Production of frangible film for lid material>

50 parts by mass of a ring-opening polymer of a norbornene-based monomer (hereinafter, referred to as "cyclic olefin resin (a)", MVR: 4 cm³/10 min (260°C, 2.16 kg), density: 1.02 g/cm³, glass transition temperature: 158°C) and 50 parts by mass of a ring-opening polymer of a norbornene-based monomer (hereinafter, "cyclic olefin resin (b)", MVR: 12 cm³/10 min (230°C, 2.16 kg), density: 1.02 g/cm³, glass transition temperature: 78°C) were used as resins for the surface resin layer (layer A).

50 parts by mass of the cyclic olefin resin (a) and 30 parts by mass of the cyclic olefin resin (b), which were the same as those of the layer A, were used as resins for the inorganic substance-containing layer (layer B), and 20 parts by mass of a masterbatch containing 40% by mass of talc was used as an inorganic substance.

100 parts by mass of polypropylene (hereinafter, referred to as "propylene resin (a)", MFR: 6 g/10 min (230°C, 21.18 N), density: 0.89 g/cm³) was used as a resin for the heat seal layer (layer C).

An extrusion was performed by a co-extrusion method through a T-die at an extrusion temperature of 250°C such that the layers were laminated in the order of (A)/(B)/(C) and the thickness ratio of each layer was 20%/30%/50%, the layers were cooled with a water-cooled metal cooling roll at 50°C, subsequently subjected to a corona discharge treatment such that the wet tension of the surface resin layer (A) was 40 mN/m, subsequently wound on a roll, and aged for 24 hours in an aging chamber at 40°C, to obtain a frangible film 1 of Example 1, which was a co-extruded laminated film having a total thickness of 30 µm.

The content of the inorganic substance with respect to the total amount of the frangible film was 2.4% by mass.

### <Production of package>

As the container (bottom material), a container having independent recessed parts for tablet accommodation, which was obtained by vacuum and pressure forming of the molded resin sheet, was used.

Next, tablets were placed in the recessed parts of the container, subsequently the heat seal layer (layer C) of the frangible film 1 was attached to the container with a doublesided tape and fixed to the bottom material so that the heat seal layer was in contact with the container, and a package 1 of Example 1 was obtained.

### <Evaluation>

The produced frangible film 1 and the package 1 were evaluated as follows.

### <<Thrust strength>>

The frangible film 1 was fixed between two sheets of stainless steel having a hole (diameter: 55 mm) at the center, a jig having a circular and flat plate-shaped tip part with a diameter of 13 mm was thrust into the film stretched over the hole, and the thrust strength (compression strength) applied when the frangible film 1 broke was measured.

Incidentally, in a case where the film did not break and, for example, became stretched out, or in a case where the film broke but the thrust strength exceeds 35 N, it was determined that the film was not a "frangible film".

The results are shown in Table 1.

### <<Push-through properties>>

The container (bottom material) of the produced package 1 was pressed with a finger to take out the tablets, which were the contents, and the push-through properties were evaluated according to the following criteria.

### [Evaluation criteria]

A: The contents were taken out without getting caught on the broken lid material with a pushing force similar to that for a commercially available aluminum foil-based PTP (satisfactorily opened).
B: Either the pushing force was large, or there was some catching; however, the content was taken out (openable).
C: The pushing force was large, and there was some catching, so that the contents were not easily taken out (difficult to open).

### (Examples 2 to 6)

Frangible films for lid materials 2 to 6 of Examples 2 to 6 and packages 2 to 6 were produced in the same manner as in Example 1, except that the resin composition and the conditions for extrusion according to the co-extrusion method in Example 1 were changed as described in Table 1, and the thickness of each layer of (A)/(B)/(C) was changed, and evaluation of these films and packages was carried out.

Incidentally, the Examples and Comparative Examples for which the column for the resin composition of the inorganic substance-containing layer (B) is blank, do not include the inorganic substance-containing layer (B) and have a layer configuration of (A)/(C).

### (Comparative Examples 1 to 6)

Frangible films for lid materials a to f of Comparative Examples 1 to 6 and packages a to f were produced in the same manner as in Example 1, except that the resin composition and the conditions for extrusion according to the co-extrusion method in Example 1 were changed as described in Table 2, and the thickness of each layer of (A)/(B)/(C) was changed, and evaluation of these films and packages was carried out.

In Table 2, the term "Propylene resin (b)" is a polypropylene with MFR: 2.5 g/10 min (230°C, 21.18 N) and density: 0.90 g/cm³.

Incidentally, the Examples and Comparative Examples for which the column for the resin composition of the inorganic substance-containing layer (B) is blank, do not include the inorganic substance-containing layer (B) and have a layer configuration of (A)/(C).

**[Table 1]**

| Layer configuration | | Resin composition | Example | | | | | |
|---|---|---|---|---|---|---|---|---|
| | | | 1 | 2 | 3 | 4 | 5 | 6 |
| Surface resin layer | (A) | Cyclic olefin resin (a) | 50 | 50 | 100 | 100 | 100 | 100 |
| | | Cyclic olefin resin (b) | 50 | 50 | | | | |
| Inorganic substance-containing layer | (B) | Cyclic olefin resin (a) | 50 | 50 | | | 90 | 80 |
| | | Cyclic olefin resin (b) | 30 | 30 | | | | |
| | | Inorganic substance | 20 | 20 | | | 10 | 20 |
| Heat seal layer | (C) | Propylene resin (a) | 100 | 100 | 100 | 100 | 100 | 100 |
| Total thickness [µm] | | | 30 | 30 | 30 | 30 | 30 | 30 |
| Layer ratio with respect to total thickness | [%] | Base material layer (A+B) | 50 | 70 | 50 | 70 | 40 | 40 |
| | | Surface resin layer (A) | 20 | 20 | 50 | 70 | 20 | 20 |
| | | Inorganic substance-containing layer (B) | 30 | 50 | | | 20 | 20 |
| | | Heat seal layer (C) | 50 | 30 | 50 | 30 | 60 | 60 |
| Thrust strength | [N] | - | 17 | 11 | 13 | 13 | 10 | 10 |
| | - | Presence or absence of breakage | Present | Present | Present | Present | Present | Present |
| Push-through properties | - | - | B | A | B | A | B | B |
| [0093] | | | | | | | | |

**[Table 2]**

| Layer configuration | | Resin composition | Comparative Example | | | | | |
|---|---|---|---|---|---|---|---|---|
| | | | 1 | 2 | 3 | 4 | 5 | 6 |
| Surface resin layer | (A) | Cyclic olefin resin (a) | 50 | 100 | 100 | | | |
| | | Cyclic olefin resin (b) | 50 | | | | | |
| | | Propylene resin (b) | | | | 100 | 100 | 100 |
| Inorganic substance-containing layer | (B) | Cyclic olefin resin (a) | | | | | | |
| | | Cyclic olefin resin (b) | | | | | | |
| | | Propylene resin (b) Inorganic substance | | | | 90 | 90 | 80 |
| | | | | | | 10 | 10 | 20 |
| Heat seal layer | (C) | Propylene resin (a) | 100 | 100 | 100 | 100 | 100 | 100 |
| Total thickness [µm] | | | 30 | 30 | 30 | 30 | 30 | 30 |
| Layer ratio with respect to total thickness | [%] | Base material layer (A+B) | 20 | 10 | 20 | 50 | 70 | 70 |
| | | Surface resin layer (A) | 20 | 10 | 20 | 20 | 20 | 20 |
| | | Inorganic substance-containing layer (B) | | | | 30 | 50 | 50 |
| | | Heat seal layer (C) | 80 | 90 | 80 | 50 | 30 | 30 |
| Thrust strength | [N] | - | 32 | 24 | 23 | 26 | 26 | 27 |
| | - | Presence or absence of breakage | Absent | Absent | Absent | Absent | Absent | Absent |
| Push-through properties | - | - | C | C | C | C | C | C |

### REFERENCE SIGNS LIST

1: Surface resin layer (A)
2: Inorganic substance-containing layer (B)
3: Heat seal layer (C)
4: Other layer (α)
10: Frangible film
20: Lid material
30: Container
40: Object to be accommodated (content)
100: Package

The present international patent application claims priority based on Japanese Patent Application No. 2022-125223 filed on August 5, 2022, the entire disclosure of which is incorporated herein by reference.

## Claims

1. A frangible film comprising a base material layer containing a cyclic olefin resin on a surface thereof,
wherein a thickness of the base material layer with respect to a total thickness of the frangible film is 40% or more.

2. The frangible film according to claim 1, wherein the base material layer contains a cyclic olefin resin having a glass transition temperature of 60°C or higher.

3. The frangible film according to claim 1, wherein the base material layer includes a surface resin layer on the surface side and an inorganic substance-containing layer containing an inorganic substance.

4. The frangible film according to claim 3, wherein a content of the inorganic substance is 0.1% by mass or more and 10% by mass or less with respect to a total amount of the frangible film.

5. The frangible film according to claim 1, further comprising a heat seal layer on an opposite side of the surface.

6. The frangible film according to claim 1, wherein a thrust strength when the frangible film is thrust out using a jig having a flat plate-shaped tip part with a diameter of 13 mm, is 35 N or less.

7. The frangible film according to claim 1, further comprising a water vapor and/or oxygen barrier layer.

8. The frangible film according to claim 1, wherein the frangible film serves as a lid material of a package.

9. A package comprising:
a container having a recessed part; and
a lid material,
wherein the lid material is the frangible film according to any one of claims 1 to 8.

10. The package according to claim 9, wherein the package is used for food or beverage packaging, or for medical purposes.
